# EUROPÄISCHE PATENTSCHRIFT

(11) **EP 1 934 576 B1**
(45) Veröffentlichungstag und Bekanntmachung des Hinweises auf die Patenterteilung: **02.02.2011**
(21) Anmeldenummer: 06792417.5
(22) Anmeldetag: 11.10.2006
(51) Int. Cl.: G01N 3/00, G01N 3/32

(54) **VERFAHREN UND VORRICHTUNG ZUR PRÜFUNG EINES PROBEKÖRPERS UNTER KOMBINIERTER UMLAUFBIEGE- UND TORSIONSBEANSPRUCHUNG**
METHOD AND DEVICE FOR CHECKING A SAMPLE BODY BY COMBINED ROTATIONAL BENDING AND TORSION LOADING
PROCEDE ET DISPOSITIF DE TEST D'UNE EPROUVETTE SOUMISE UN ESSAI DE FLEXION ROTATIVE ET DE TORSION COMBINE

(30) Priorität: 14.10.2005 AT 16852005
(43) Veröffentlichungstag der Anmeldung: 25.06.2008
(60) Teilanmeldung: 10193031.1
(73) Patentinhaber: Montanuniversität Leoben, 8700 Leoben (AT)
(72) Erfinder: FRÖSCHL, Jürgen, A-4320 Perg (AT); EICHLSEDER, Wilfried, A-8700 Leoben (AT)
(74) Vertreter: Dilg, Haeusler, Schindelmann Patentanwaltsgesellschaft mbH
(86) Internationale Anmeldenummer: PCT/EP2006/009819
(87) Internationale Veröffentlichungsnummer: WO 2007/042275

(56) Entgegenhaltungen:
- EP-A1- 0 410 370
- WO-A-99/02962
- AT-U1- 7 428
- DE-B1- 2 331 054
- DE-C- 534 157
- FR-A- 2 247 139
- FR-A- 2 411 403
- GB-A- 1 531 135
- US-A1- 2004 016 301

## Beschreibung

Die Erfindung betrifft ein Verfahren und eine Vorrichtung zur Prüfung eines Probekörpers unter kombinierter Umlaufbiege- und Torsionsbeanspruchung, vorzugsweise mit hoher Frequenz einer oder beider Beanspruchungen.

Um für Maschinenteile eine möglichst praxisgerechte Dimensionierung zu ermöglichen, ist es notwendig, neben herkömmlichen Werkstoffprüfungen unter quasistatischer Zugbeanspruchung auch Versuche unter zyklischer Beanspruchung durchzuführen, zum Beispiel Versuche unter einachsiger zyklischer Zug- bzw. Biegebeanspruchung. Die Forschungen auf dem Gebiet der Werkstoffermüdung unter mehrachsiger Beanspruchung werden üblicherweise unter kombinierter Zug/Torsionsbeanspruchung durchgeführt. An einigen Forschungseinrichtungen wurden zusätzlich Prüfmaschinen für kombinierte Axialbiege-/Torsionsbeanspruchung gebaut. Beide Prüfmethoden haben jedoch den Nachteil, dass bei einer Änderung des Frequenzverhältnisses zwischen den beiden Beanspruchungen sich die Anzahl der höchstbeanspruchten Stellen im Prüfquerschnitt der Werkstoffprobe nicht ändert. Somit lassen sich einige für die Bestimmung des Ermüdungsverhaltens wichtige Aussagen nicht treffen.

Es sind daher Überlegungen angestellt worden, noch zusätzliche Informationen über einen Werkstoff zu erhalten, die für die Beschreibung des Ermüdungsverhaltens des Werkstoffes wesentlich sind. Hierbei hat sich eine kombinierte Umlaufbiege-Torsionsbeanspruchung als zweckmäßig erwiesen, zumal dabei mehrere höchst beanspruchte Stellen im Prüfquerschnitt je nach gewähltem Frequenzverhältnis auftreten.

Zur Durchführung einer kombinierten Umlaufbiege-Torsionsbeanspruchung eines Probekörpers ist es bekannt, eine servohydraulische Prüfeinrichtung einzusetzen, die eine Prüfung unter einer solchen Beanspruchungskombination ermöglicht. Bei dieser Prüfeinrichtung handelt es sich um eine Entwicklung des Laboratoire Matériaux Endommagement Fiabilite, Bordeaux, France. Eine solche servohydraulische , Prüfeinrichtung erlaubt jedoch nur sehr geringe Prüffrequenzen, zudem ist eine solche Prüfung mit einem hohen Energiebedarf verbunden.

DE 37 16 215 A1 offenbart eine Umlaufbiegeprüfmaschine mit Torsionsbelastungseinrichtung zum Einleiten eines umlaufenden Biegemoments und einer Torsionsbelastung in einen Prüfling. FR-A-2411403 offenbart ein Gerät zur Prüfung einer Probe, indem diese durch an zwei einander gegenüberliegenden Endbereichen der Probe aufgebrachte Torsionsmomente einer Torsionsbeanspruchung ausgesetzt wird, und indem eine Biegebeanspruchung an einer Stelle zwischen den Endbereichen aufgebracht wird.

JP 2004150976 A offenbart ein Lasttestgerät für ein Torsionsbiegen und eine Achslast.

JP 200227392 A offenbart eine kombinierte Torsions-Biege-Belastungstestmaschine.

JP 7260652 A offenbart einen Statikbelastungstester.

JP 61014541 A offenbart eine Torsions- und Biege-Testmaschine.

Aus der JP 4232441 ist es an sich bekannt, zur Erzeugung einer Torsionsschwingung eine Probe an ihren beiden Enden mittels Elektromotoren in Rotation zu bringen und die Drehwinkel der Motoren über Funktionsgeber zu detektieren. Geräte dieser Art, bei denen die beiden an jeweils einem Ende der Probe angekoppelten Elektromotoren mit unterschiedlicher Drehzahl betrieben werden, sind vor allem für das Prüfen von Drähten geeignet.

Aus der EP 0 410 370 B1 ist eine Vorrichtung bekannt, bei der eine Probe an jeweils einem Ende mittels eines Elektromotors in Drehung versetzbar ist, wobei die Drehbewegung eines Elektromotors, der mit einem Ende der Probe gekoppelt ist, mittels einer Blockiervorrichtung blockiert und plötzlich wieder freigegeben werden kann.

Der Erfindung liegt die Aufgabe zugrunde, ein Verfahren sowie eine Vorrichtung zu schaffen, welche eine Prüfung eines Probekörpers unter kombinierter Umlaufbiegeund Torsionsbeanspruchung ermöglichen, wobei ein Prüfergebnis in kurzer Zeit erhalten werden kann, und zwar bei möglichst geringem Energiebedarf.

Diese Aufgabe wird durch die Gegenstände gemäß den unabhängigen Patentansprüchen gelöst.

Erfindungsgemäß ist ein Verfahren zur Prüfung einer Probe unter kombinierter Umlaufbiege- und Torsionsbeanspruchung geschaffen, aufweisend:
- In-Rotation-Bringen der Probe,
- Aussetzen der Probe einer Torsionsbeanspruchung durch an zwei einander gegenüberliegenden Endbereichen der Probe aufgebrachte elektromotorisch erzeugte Torsionsmomente, sowie
- Aussetzen der Probe einer Biegebeanspruchung, wobei ein elektromotorisch erzeugtes Torsionsmoment auf die Probe aufgebracht wird indem die Probe an einem Endbereich mittels eines ersten Elektromotors mit einer vorbestimmten Drehzahl in Rotation versetzt wird und an einem anderen Endbereich an einen zweiten Elektromotor gekoppelt wird und beide Elektromotoren durch gegenseitiges Verdrehen ein Torsionsmoment an der probe eizengen. Die beiden Elektromotoren können dermaßen geregelt werden, dass sowohl ein zyklisches als auch ein überlagertes statisches Torsionsmoment auf die Probe aufgebracht werden kann. Einer der beiden Elektromotoren kann zusätzlich die Probe in eine gleichmäßige Rotation mit vorwählbarer Drehzahl versetzen.

Eine sehr effiziente Energieeinsparung wird erfindungsgemäß dadurch erzielt, daß die elektrischen Kreisläufe der beiden Elektromotoren gekoppelt sind, wobei Energie für den antreibenden Elektromotor vom gerade im Bremsbetrieb befindlichen Motor geliefert werden kann.

Mit besonders geringem Aufwand lässt sich die Biegebeanspruchung der Probe gemäß einem exemplarischen Ausführungsbeispiel der Erfindung verwirklichen, indem die Krafteinleitung über den Stator jedes Elektromotors erfolgt, wobei die Biegebeanspruchung über die Probelänge in konstanter Größe erfolgt.

Untersuchungen zur Ermittlung von volumetrischen Einflüssen auf die Festigkeitseigenschaften sind gemäß einem exemplarischen Ausführungsbeispiel der Erfindung ermöglicht. Darüber hinaus bietet die kombinierte Umlaufbiege-Torsionsbeanspruchung den Vorteil einer Prüfung an Werkstoffproben unter bauteilnahen Beanspruchungsbedingungen.

Zusätzlich ermöglicht die Prüfvorrichtung gemäß einem exemplarischen Ausführungsbeispiel der Erfindung eine Schwingfestigkeitsprüfung unter reiner Torsionsschwingbeanspruchung sowie reiner Umlaufbiegewechselbeanspruchung.

Bei dem Verfahren kann die Probe unter kombinierter Umlaufbiege- und Torsionsbeanspruchung mit hoher Frequenz geprüft werden. Im Rahmen dieser Anmeldung kann unter einer "hohen Frequenz" eine Frequenz oberhalb von 15 Hz, insbesondere eine Frequenz von mindestens 30 Hz verstanden werden. Die Frequenz kann bis zu 60 Hz und mehr betragen, wohingegen bei konventionellen, servohydraulischen Systemen eine Obergrenze bei 15 Hz liegt.

Bei dem Verfahren gemäß einem exemplarischen Ausführungsbeispiel der Erfindung kann das In-Rotation-Bringen der Probe ein relatives In-Rotation-Bringen der Probe bezüglich eines Elektromotors aufweisen. Zum Beispiel kann ein Elektromotor (zumindest teilweise) in einem Laborsystem ruhen und die Probe bezüglich des Elektromotors und bezüglich des Laborsystems rotiert werden. Es kann aber auch ein Elektromotor (zum Beispiel ein Servomotor) bezüglich des Laborsystems rotieren und die Probe in dem Laborsystem ruhen.

Gemäß einem exemplarischen Ausführungsbeispiel der Erfindung kann bei dem Verfahren das Aussetzen der Probe einer Torsionsbeanspruchung durch an zwei einander gegenüberliegenden Endbereichen der Probe aufgebrachte Torsionsmomente erfolgen. Alternative Aufhängungen sind möglich, jedoch ist es vorteilhaft, dass der Kraftfluss im Wesentlichen probenmittig verläuft.

Bei einem Verfahren gemäß einem exemplarischen Ausführungsbeispiel der Erfindung können die Torsionsmomente elektromotorisch (zum Beispiel mittels Servomotoren) erzeugt werden. Alternativ kann auch ein Verbrennungsmotor oder ein anderer ausreichend starker Antriebsmechanismus eingesetzt werden.

Bei einem Verfahren gemäß einem exemplarischen Ausführungsbeispiel der Erfindung kann die Biegebeanspruchung über zwei einander gegenüberliegende Endbereiche der Probe, an einer Stelle zwischen deren Endbereichen oder an einer oder mehreren anderen Stellen aufgebracht werden.

Bei einem Verfahren gemäß einem exemplarischen Ausführungsbeispiel der Erfindung kann ein Wechselverformungsverhalten der Probe erfasst werden. Zur Erfassung des Wechselverformungsverhaltens können vorzugsweise zwei Drehwinkelgeber der Elektromotore zur Ermittelung der Schubverzerrungen im Prüfquerschnitt sowie eine Messeinrichtung zur Erfassung der lokalen Normaldehnungen in der Werkstoffprobe eingesetzt werden. Dies kann beispielsweise über eine Linearmesseinrichtung erfolgen. Dies kann es erlauben, zusätzliche Informationen zu erhalten, die zum Beispiel im Rahmen einer Materialmodellierung verwendet werden können.

Eine Vorrichtung gemäß einem exemplarischen Ausführungsbeispiel der Erfindung zur Durchführung des oben beschriebenen Verfahrens weist Folgendes auf:
- zwei jeweils mittels eines Elektromotors in Drehbewegung bringbare Einspanneinrichtungen zum Einspannen einer Probe jeweils mit einem Ende in einer der Einspannvorrichtungen, welche Elektromotoren mit einander entgegengesetzten Torsionsmomenten antreibbar sind, und
- eine die Einspanneinrichtungen aus einer fluchtenden Stellung abdrängende Krafteinrichtung.

Vorzugsweise sind als Elektromotoren Servomotoren eingesetzt. Andere Ausgestaltungen, zum Beispiel das Einsetzen von Verbrennungsmotoren, sind ebenfalls möglich.

Zur genauen Detektierung der Torsionsbelastung ist gemäß einem exemplarischen Ausführungsbeispiel der Erfindung jeder Elektromotor mit einem Drehwinkelgeber ausgestattet und ist eine Drehmomentenmesseinrichtung zwischen den Elektromotoren vorgesehen, deren Messdaten einem Drehmomentenregler zuführbar sind.

Die Krafteinleitung für die Biegebeanspruchung des Probekörpers erfolgt gemäß einem exemplarischen Ausführungsbeispiel der Erfindung mittels eines Kraftgerätes, wie einer Hubspindel oder einem Druckmittelzylinder, welches Kraftgerät mit einem Träger gekoppelt ist, der beidseitig der Koppelung mit dem Kraftgerät über Hebel eines Hebelsystems mit jeweils einem Stator der Elektromotoren gekoppelt ist.

Vorzugsweise ist zur Einstellung unterschiedlicher Biegebeanspruchungen die Distanz der Anlenkungen der Hebel des Hebelsystems am Träger und/oder am Stator variabel.

Eine bevorzugte Ausführungsform ist dadurch gekennzeichnet, dass die Koppelung des Kraftgerätes mit dem Träger über ein elastisch nachgiebiges Element, vorzugsweise ausgebildet als Schraubenfeder, verwirklicht ist.

In dieser Patentanmeldung offenbarte Ausgestaltungen der Vorrichtung(en) gelten auch für das Verfahren, und umgekehrt

Exemplarische Aspekte der Erfindung sind nachfolgend anhand eines in der Zeichnung schematisch dargestellten Ausführungsbeispiels näher erläutert, wobei Fig. 1 eine Gesamtansicht einer Vorrichtung zur Prüfung eines Probekörpers unter kombinierter Umlaufbiege- und Torsionsbeanspruchung gemäß einem exemplarischen Ausführungsbeispiel der Erfindung veranschaulicht. Die Fig. 2a bis. 2c zeigen unterschiedliche Bruchflächen des Probekörpers für unterschiedlich eingestellte Frequenzverhältnisse. Die Fig. 3a und Fig. 3b zeigen jeweils Fotographien der Bruchfläche einer Probe in Stirnansicht und in Seitenansicht. Fig. 4 gibt einen Torsionsmomenten-Zeitverlauf in Diagrammform wieder.

Mit 1 ist eine Probe bezeichnet, die von einem zylindrischen Stab, z.B. mit einem Durchmesser im Bereich zwischen 5 und 10 mm, vorzugsweise 6 bis 7,5 mm, gebildet ist. Andere Prüfdurchmesser sind möglich. An jeweils einem Ende der Probe 1 ist eine Einspanneinrichtung 2 vorgesehen, mit der die Probe 1 an jeweils eine Antriebswelle 3 eines elektrischen Antriebsmotors 4 angeschlossen ist. Einer der Elektromotoren 4 ist mit einer Drehmomenten-Messdose 5 ausgestattet. Die Elektromotoren 4, die als Servomotoren ausgebildet sind, sind mit ihren Statoren um eine Schwenkachse 6 gegenüber einem Fundament 7 schwenkbeweglich gelagert, welche Schwenkachsen 6 sich quer zu den Antriebswellen 3 der Elektromotoren 4 und zueinander parallel erstrecken. Jeder Elektromotor 4 weist einen Drehwinkelgeber 8 auf und ist mit einem Servoumrichter 9 ausgestattet, über den zyklisch ein Torsionsmoment an jeden der beiden Elektromotoren 4 aufgebracht werden kann. Die Probe 1 erfährt hierdurch eine zyklische Torsionsmomentbeanspruchung mit möglicher Torsionsmittelmomentüberlagerung.

Die beiden Elektromotoren 4 sind elektrisch gekoppelt, was dazu führt, dass der gerade bremsende Elektromotor 4 einen Großteil der Energie für den treibenden Elektromotor liefert.

Zur Aufbringung einer Biegebelastung ist ein Kraftgerät 10, wie beispielsweise eine Hubspindel, vorgesehen, mit der ein Träger 11 etwa mittig seiner Längserstreckung belastbar ist. In den beiden Endbereichen 12 des Trägers 11 sind Hebel 13 eines Hebelsystems angelenkt, über die die von der Hubspindel 10 auf den Träger 11 übertragene Kraft in die Statoren der beiden Elektromotoren 4 übertragbar ist. Die Anlenkstellen der Hebel 13 des Hebelsystems am Träger 11 und/oder am jeweiligen Stator sind zur genauen Einstellung bestimmter Biegebeanspruchungen der Probe 1 variabel, so dass deren Entfernung von der Koppelung des Trägers 11 mit dem Kraftgerät 10 einstellbar ist.

Das Kraftgerät 10 ist mit dem Träger 11 über ein elastisches Zwischenglied 14, wie beispielsweise eine Spiralfeder, gekoppelt.

Mittels eines Regelgerätes 15 lassen sich sowohl die von dem Kraftgerät 10 auf den Träger 11 übertragene Kraft als auch die Drehmomentenamplitude und der Drehmomentmittelwert für die beiden Elektromotoren 4 variieren. An das Regelgerät 15 angeschlossen ist eine Computereinheit 16 mit Bildschirm zur Ergebnisdarstellung.

Kommt es zu einem Bruch der Probe 1, wird dies über einen Endschalter 17 registriert und es werden die Elektromotoren 4 und auch das Kraftgerät 10 abgeschaltet.

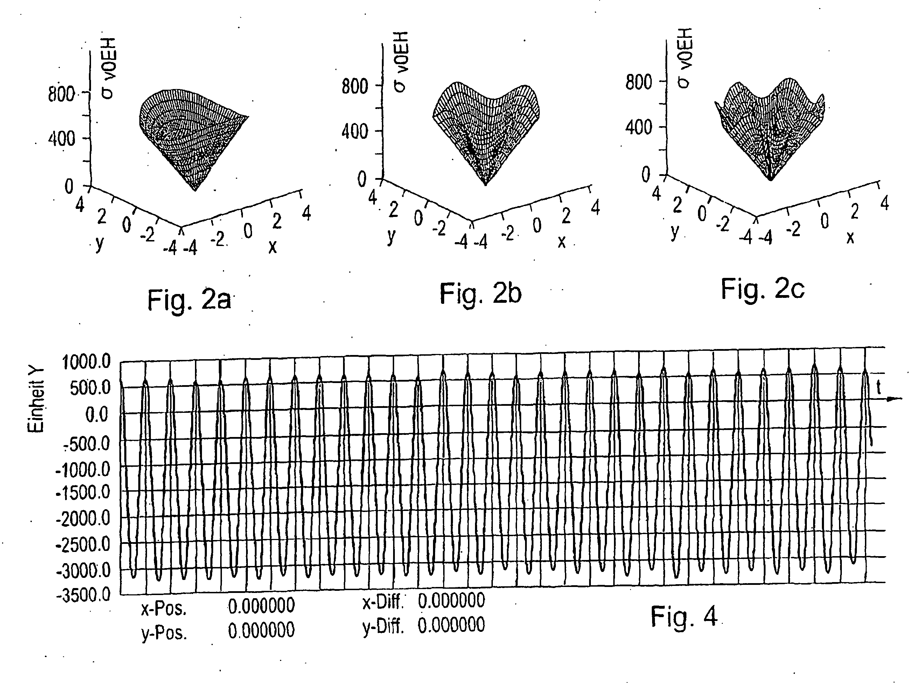

Die erfindungsgemäße Vorrichtung für kombinierte Umlaufbiege-Torsion erlaubt Probeversuche, welche mit herkömmlichen Prüfmaschinen für kombinierte Zug-Torsion nicht möglich sind. Ein Grund dafür ist, dass bei der Umlaufbiege-Torsion mehrere höchst beanspruchte Stellen im Prüfquerschnitt je nach gewähltem Frequenzverhältnis fτ/σ auftreten. Gemäß Fig. 2a beträgt das Frequenzverhältnis 1, gemäß Fig. 2b 2 und gemäß Fig. 2c 3. Bei einer kombinierten Zugtorsionsbelastung gibt es immer nur eine höchst beanspruchte Stelle. Unter kombinierter Umlaufbiegung/Torsion erhält man daher zusätzliche Informationen, welche für die Beschreibung des Ermüdungsverhaltens von Werkstoffen sehr wesentlich sind.

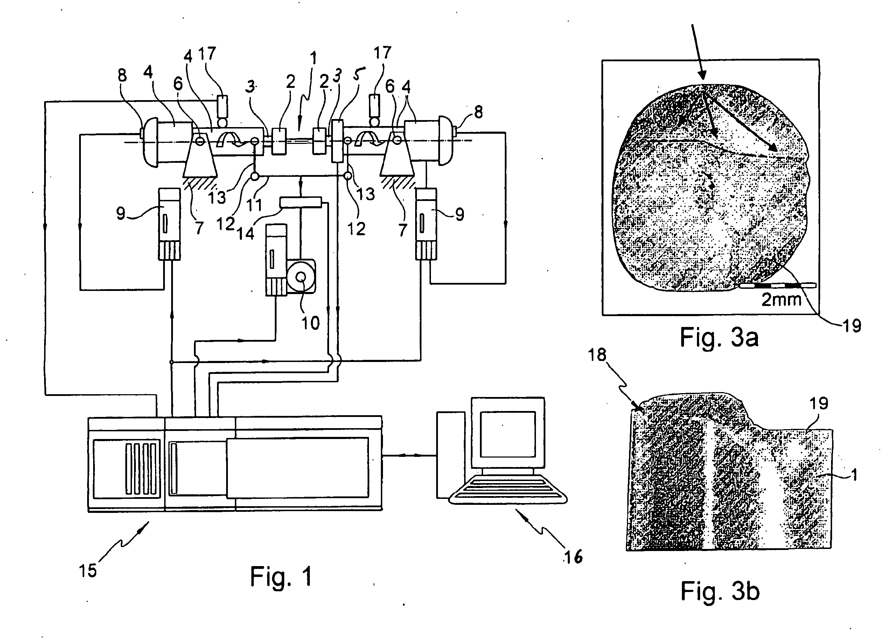

Die Fig. 3a und 3b zeigen Bruchflächen einer erfindungsgemäß geprüften Probe 1. An der Bruchfläche sind ein Primäranriss 18 und ein Sekundäranriss 19 zu erkennen,

Mit der oben beschriebenen Vorrichtung und einem zugehörigen Verfahren können somit Schwingfestigkeitsversuche an Proben 1 unter kombinierter Umlaufbiege-Torsionsbeanspruchung durchgeführt werden. Sie eignet sich insbesondere für folgende Beanspruchungsarten:
- Proportionale Beanspruchung
- Torsionsmittelmomentüberlagerung
- Veränderung des Frequenzverhältnisses f_{τ/σ}
- Konsekutive Beanspruchungen
- Einachsige Versuche unter reiner Umlaufbiegung bzw. Torsion
- Mehrstufige Versuche

Die Versuche werden an Werkstoffproben 1 durchgeführt, deren Prüfdurchmesser an das Belastungsniveau der Vorrichtung und der erwarteten Werkstofffestigkeit angepasst ist. Es können sowohl Versuche an ungekerbten wie auch an gekerbten Proben 1 durchgeführt werden.

Die Vorrichtung kann mit unterschiedlichen Prüflasten betrieben werden. Bei der Auslegung sollte auf eine genaue Abstimmung der Schwingungsverhältnisse geachtet werden. Die Vorrichtung kann zudem im Bereich der Torsionseigenfrequenz der Prüfvorrichtung betrieben werden, wodurch auch höhere Torsionsmomente realisiert werden können. Die Torsionseigenfrequenz kann durch Veränderung der Massenträgheiten beeinflusst werden, beispielsweise durch Anordnung unterschiedlicher Schwungmassen.

Vorteile des erfindungsgemäßen Verfahrens und der *erfindungsgemäßen Vorrichtung sind nachfolgend dargestellt:
- Es können Werkstoffproben mit sehr wirklichkeitsnahen Beanspruchungen untersucht werden. Gerade die Kombination aus Umlaufbiegung und Torsion tritt nämlich an vielen Bauteilen, wie zum Beispiel Kurbelwellen von Explosionsmotoren, auf.
- Es kann mit sehr hohen Prüffrequenzen geprüft werden, so sind beispielsweise Prüffrequenzen in der Größenordnung von 60 Hz und darüber verwirklichbar.
- Die Energiekosten sind sehr gering. Insbesondere bei elektrischer Koppelung der beiden Elektromotoren 4.
- Es besteht die Möglichkeit, die Prüfung im Resonanzbereich durchzuführen.
- Die Regelung der Vorrichtung kann in einfacher Weise entsprechend einer Prüfanforderung verwirklicht werden.

Ergänzend ist darauf hinzuweisen, dass "aufweisend" keine anderen Elemente oder Schritte ausschließt und "eine" oder "ein" keine Mehrzahl ausschließt. Ferner sei darauf eingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können, sofern die kombination in dem Schutzbereich der Ansprüche fällt.

## Patentansprüche

1. Verfahren zur Prüfung einer Probe (1) unter kombinierter Umlaufbiegeund Torsionsbeanspruchung, wobei das Verfahren aufweist:
- In-Rotation-Bringen der Probe (1);
- Aussetzen der Probe (1) einer Torsionsbeanspruchung durch an zwei Bereichen der Probe (1) aufgebrachte Torsionsmomente, sowie
- Aussetzen der Probe (1) einer Biegebeanspruchung;
wobei ein elektromotorisch erzeugtes Torsionsmoment auf die Probe (1) aufgebracht wird, indem die Probe (1) an einem Endbereich mittels eines ersten Elektromotors (4) mit einer vorbestimmten Drehzahl in Rotation versetzt wird und an einem anderen Endbereich an einen zweiten Elektromotor (4) gekoppelt wird und beide Elektromotoren (4) durch gegenseitiges Verdrehen ein Torsionsmoment an der Probe (1) erzeugen; und
wobei elektrische Kreisläufe der beiden Elektromotoren (4) gekoppelt sind,
wobei Energie für den antreibenden Elektromotor (4) vom gerade im Bremsbetrieb befindlichen Elektromotor (4) geliefert wird.

2. Verfahren nach Anspruch 1, wobei die Biegebeanspruchung der Probe (1) durch eine über einen Stator jedes Elektromotors (4) erfolgende Krafteinleitung bewirkt wird.

3. Verfahren nach einem der Ansprüche 1 oder 2, wobei die Probe (1) unter kombinierter Umlaufbiege- und Torsionsbeanspruchung mit einer Frequenz oberhalb von 15 Hz einer oder beider Beanspruchungen geprüft wird.

4. Verfahren nach einem der Ansprüche 1 bis 3, wobei das In-Rotation-Bringen der Probe (1) ein relatives In-Rotation-Bringen der Probe (1) bezüglich eines Elektromotors (4) aufweist, derart,
dass der erste oder zweite Elektromotor (4) in einem Laborsystem ruht und die Probe (1) bezüglich des ersten oder zweiten Elektromotors (4) und bezüglich des Laborsystems rotiert wird, oder
dass der erste oder zweite Elektromotor (4) bezüglich des Laborsystems rotiert und die Probe (1) in dem Laborsystem ruht.

5. Verfahren nach einem der Ansprüche 1 bis 4, wobei das Aussetzen der Probe (1) einer Torsionsbeanspruchung durch an zwei einander gegenüberliegenden Endbereichen der Probe (1) aufgebrachte Torsionsmomente erfolgt.

6. Verfahren nach einem der Ansprüche 1 bis 5, wobei die aufgebrachten Torsionsmomente elektromotorisch erzeugt werden.

7. Verfahren nach einem der Ansprüche 1 bis 6, wobei die Biegebeanspruchung entweder über zwei einander gegenüberliegende Endbereiche der Probe (1) oder an einer Stelle zwischen deren Endbereichen aufgebracht wird.

8. Verfahren nach einem der Ansprüche 1 bis 7, wobei ein Wechselverformungsverhalten der Probe (1) erfasst wird.

9. Vorrichtung zur Durchführung des Verfahrens nach einem der Ansprüche 1 bis 8, wobei die Vorrichtung aufweist:
- zwei jeweils mittels eines Elektromotors (4) in Drehbewegung bringbare Einspanneinrichtungen (2) zum Einspannen einer Probe (1) jeweils mit einem Ende in einer der Einspannvorrichtungen (2), welche Elektromotoren mit einander entgegengesetzten Torsionsmomenten antreibbar sind, und
- eine die Einspanneinrichtungen (2) aus einer fluchtenden Stellung abdrängende Krafteinrichtung, um die Probe (1) der Biegebeanspruchung auszusetzen,
wobei elektrische Kreisläufe der Elektromotoren (4) gekoppelt sind, derart dass Energie für den antreibenden Elektromotor (4) vom gerade im Bremsbetrieb befindlichen Motor geliefert wird.

10. Vorrichtung nach Anspruch 9, wobei als Elektromotoren (4) Servomotoren eingesetzt sind.

11. Vorrichtung nach Anspruch 9 oder 10, wobei jeder Elektromotor (4) mit einem Drehwinkelgeber (8) ausgestattet ist und eine Drehmomentenmesseinrichtung (5) zwischen den Elektromotoren (4) vorgesehen ist, deren Messdaten einem Drehmomentenregler zuführbar sind.

12. Vorrichtung nach einem der Ansprüche 9 bis 11, wobei zur Krafteinleitung für die Biegebeanspruchung der Probe (1) ein Kraftgerät (10), insbesondere eine Hubspindel oder ein Druckmittelzylinder, mit einem Träger (11) gekoppelt ist, der beidseitig der Koppelung mit dem Kraftgerät (10) über Hebel (13) eines Hebelsystems mit jeweils einem Stator der Elektromotoren (4) gekoppelt ist.

13. Vorrichtung nach Anspruch 12, wobei die Distanz der Anlenkung der Hebel (13) des Hebelsystems am Träger (11) und/oder am Stator variabel ist.

14. Vorrichtung nach einem der Ansprüche 12 oder 13, wobei die Koppelung des Kraftgerätes (10) mit dem Träger (11) über ein elastisch nachgiebiges Element (14), vorzugsweise ausgebildet als Schraubenfeder, verwirklicht ist.

15. Vorrichtung nach einem der Ansprüche 9 bis 14, aufweisend eine Einrichtung zum Erfassens eines Wechselverformungsverhaltens der Probe (1).

## Claims

1. Method of testing a sample (1) under a combined stress of rotational bending and torsional stress, wherein the method comprises:
- setting the sample (1) in rotation;
- subjecting the sample (1) to a torsional stress by means of torsional moments applied to two sections of the sample (1), as well as
- subjecting the sample (1) to a bending stress;
wherein an electromotive generated torsional moment is applied to the sample (1), wherein the sample (1) is put, at an end section, into rotation with a predetermined rotational speed by a first electric motor (4) and is coupled, at another end section, to a second electric motor (4) and both electric motors (4) generate a torsional moment at the sample (1) by reciprocal twisting; and
wherein electrical circuitries of both electric motors (4) are coupled, wherein the energy for the driving electric motor (4) is supplied by the motor being in braking operation.

2. Method of claim 1, wherein the bending stress of the sample (1) is effected by a load transmission being carried out over the stator of each electric motor (4).

3. Method of one of the claims 1 or 2, wherein the sample (1) is tested under a combined stress of rotational bending and torsional stress with a frequency above 15 Hz of one or both stresses.

4. Method of one of the claims 1 to 3, wherein the setting the sample (1) in rotation comprises a relative setting the sample (1) in rotation with respect to one electric motor (4), in such a way,
that the first or second electric motor (4) rests in a laboratory system and the sample (1) is rotated with respect to the first or second electric motor (4) and with respect to the laboratory system, or
that the first or second electric motor (4) is rotated with respect to the laboratory system and the sample (1) rests in the laboratory system.

5. Method of one of the claims 1 to 4, wherein the exposing of the sample (1) to the torsional stress is carried out by two torsional moments applied to two opposed of each other located end sections of the sample (1).

6. Method of one of the claims 1 to 5, wherein the applied torsional moments are generated electromotive.

7. Method of one of the claims 1 to 6, wherein the bending stress is either applied over two opposed of each other located end sections of the sample (1) or is applied at a location between its end sections.

8. Method of one of the claims 1 to 7, wherein an alternating load deformation characteristics of the sample (1) is detected.

9. Device for executing the method of one of the claims 1 to 8, wherein the device comprises:
- two clamping devices (2) for clamping the sample (1) with a respective end in one of the clamping devices (2), each of which clamping devices (2) being settable in rotation by means of an electric motor (2), which electric motors are drivable with opposed torsional moments, and
- a force device for pushing away the clamping devices (2) from an aligned position for subjecting the sample (1) to a bending stress,
wherein electrical circuitries of both electric motors (4) are coupled in such a way that the energy for the driving electric motor (4) is supplied by the motor being in braking operation.

10. Device of claim 9, wherein servo motors are used as electric motors (4).

11. Device of claim 9 or 10, wherein each electric motor (4) is equipped with a rotary angle transmitter and between the electric motor (4) a torsional moment measuring device (5) is provided, which measuring data are suppliable to a torque regulator.

12. Device of one of the claims 9 to 11, wherein for load transmission for the bending stress of the sample (1) a force device (10), in particular a lifting spindle or a fluid pressure cylinder, is coupled with a beam (11) which is coupled, on both sides of the coupling, over levers (13) of a lever system with a respective stator of the electric motors (4) and with the force device (10).

13. Device of claim 12, wherein the distance of the linkage of the levers (13) of the lever system to the beam (11) and/or to the stator is variable.

14. Device of one of the claims 12 or 13, wherein the coupling of the force device (10) with the beam (11) is realized by an elastic docile element (14), preferably designed as a coil spring.

15. Device of one of the claims 9 to 14, comprising a device for detecting a alternating load deformation characteristics of the sample (1).

## Revendications

1. Procédé de contrôle d'échantillon (1) sous l'effet d'un effort combiné de flexion rotative et de torsion, ledit procédé comprenant les étapes consistant à :
- mettre l'échantillon en rotation (1) ;
- soumettre l'échantillon (1) à un effort de torsion par des moments de torsion exercés au niveau de deux zones de l'échantillon (1), ainsi que
- soumettre l'échantillon (1) à un effort de flexion ;
dans lequel un moment de torsion généré par un moteur électrique est exercé sur l'échantillon (1) en ce que l'échantillon (1) est mis en rotation au niveau d'une zone d'extrémité au moyen d'un premier moteur électrique (4) à un régime prédéterminé et est couplé au niveau d'une autre zone d'extrémité avec un deuxième moteur électrique (4), et les deux moteurs électriques (4) génèrent un moment de torsion sur l'échantillon (1) par une torsion mutuelle; et
dans lequel des circuits électriques des deux moteurs électriques (4) sont couplés, dans lequel de l'énergie pour le moteur électrique (4) d'entraînement est fournie par le moteur se trouvant actuellement en mode de freinage.

2. Procédé selon la revendication 1, dans lequel l'effort de flexion de l'échantillon (1) est provoqué par un transfert de charge effectué par l'intermédiaire d'un stator de chaque moteur électrique (4).

3. Procédé selon les revendications 1 ou 2, dans lequel l'échantillon (1) est contrôlé sous l'effet d'un effort combiné de flexion rotative et de torsion à une fréquence au-dessus de 15 Hz d'un ou des deux efforts.

4. Procédé selon l'une quelconque des revendications 1 à 3, dans lequel la mise en rotation de l'échantillon (1) présente une mise en rotation relative de l'échantillon (1) par rapport à un moteur électrique (4) de telle sorte
que le premier ou le deuxième moteur électrique (4) est immobilisé dans un système expérimental et l'échantillon (1) est amené à tourner par rapport au premier ou deuxième moteur électrique (4) et par rapport au système expérimental, ou
que le premier ou deuxième moteur électrique (4) est amené à tourner par rapport au système expérimental et l'échantillon (1) est immobilisé dans le système expérimental.

5. Procédé selon l'une quelconque des revendications 1 à 4, dans lequel le fait de soumettre l'échantillon (1) à un effort de torsion s'effectue par des moments de torsion exercés au niveau de deux zones d'extrémité mutuellement opposées de l'échantillon (1).

6. Procédé selon l'une quelconque des revendications 1 à 5, dans lequel les moments de torsion exercés sont générés de façon électromotrice.

7. Procédé selon l'une quelconque des revendications 1 à 6, dans lequel l'effort de flexion est exercé soit par l'intermédiaire de deux zones d'extrémité mutuellement opposées de l'échantillon (1), soit à un endroit entre les zones d'extrémité de celui-ci.

8. Procédé selon l'une quelconque des revendications 1 à 7, dans lequel un comportement de déformation réciproque de l'échantillon (1) est détecté.

9. Dispositif pour mettre en oeuvre le procédé selon l'une quelconque des revendications 1 à 8, dans lequel ledit dispositif présente :
- deux dispositifs de serrage (2), pouvant respectivement être mis en rotation par un moteur électrique (4), pour serrer un échantillon (1) respectivement par une extrémité dans l'un des dispositifs de serrage (2), lesdits moteurs électriques pouvant être entraînés avec des moments de torsion mutuellement opposés, et
- un dispositif mécanique chassant les dispositifs de serrage (2) d'une position alignée afin de soumettre l'échantillon (1) à un effort de flexion,
où des circuits électriques des deux moteurs électriques (4) sont couplés de telle manière que de l'énergie pour le moteur électrique (4) d'entraînement soit fournie par le moteur se trouvant actuellement en mode de freinage.

10. Dispositif selon la revendication 9, dans lequel des servomoteurs sont utilisés en tant que moteurs électriques (4).

11. Dispositif selon les revendications 9 ou 10, dans lequel chaque moteur électrique (4) est équipé d'un capteur d'angle de rotation (8) et un dispositif de mesure de couple de rotation (5) est prévu entre les moteurs électriques (4) dont les données mesurées peuvent être amenées à un régulateur de couple de rotation.

12. Dispositif selon l'une quelconque des revendications 9 à 11, dans lequel pour le transfert de charge destiné à l'effort de flexion de l'échantillon (1) un appareil mécanique (10), en particulier une vis de montée ou un vérin à fluide sous pression, est couplé avec un support (11) qui est couplé des deux côtés de l'accouplement avec l'appareil mécanique (10) par l'intermédiaire des leviers (13) d'un système de leviers à respectivement un stator des moteurs électriques (4).

13. Dispositif selon la revendication 12, dans lequel la distance de l'articulation des leviers (13) du système de leviers sur le support (11) et/ou sur le stator est variable.

14. Dispositif selon l'une quelconque des revendications 12 ou 13, dans lequel l'accouplement de l'appareil mécanique (10) avec le support (11) est réalisé par l'intermédiaire d'un élément élastiquement flexible (14), de préférence réalisé comme un ressort hélicoïdal.

15. Dispositif selon l'une quelconque des revendications 9 à 14, présentant un dispositif pour détecter un comportement de déformation réciproque de l'échantillon (1).
